# EUROPÄISCHE PATENTANMELDUNG

(11) **EP 2 439 115 A2**
(43) Veröffentlichungstag der Anmeldung: **11.04.2012**
(21) Anmeldenummer: 11181919.9
(22) Anmeldetag: 20.09.2011
(51) Int. Cl.: B60S 1/52

(54) **Vorrichtung für eine Scheibenwaschanlage zur Ausbildung wenigstens eines Flüssigkeitsstrahls**

(30) Priorität: 06.10.2010 DE 202010013930 U
(71) Anmelder: REHAU AG + Co, 95111 Rehau (DE)
(72) Erfinder: Steeg, Claus-Christian, 09606 Oelsnitz (DE); Kasack, Daniel, 04177 Leipzig (DE); Zielke, Peter, 08626 Adorf (DE); Hofmann, Jürgen, 34212 Melsungen (DE)

(57) **Zusammenfassung**

Die Erfindung betrifft eine Vorrichtung für eine Scheibenwischeranlage zur Ausbildung wenigstens eines Flüssigkeitsstrahls, mit wenigstens einem Gehäuse (12), wenigstens einer Düseneinheit (14), die eine Düse (16) zur Erzeugung eines Flüssigkeitsstrahls aus einer Scheibenreinigungsflüssigkeit aufweist, wobei die Düseneinheit (14) um eine Gehäuseachse (18) des Gehäuses (12) schwenkbar an dem Gehäuse (12) angebracht ist, einem Einstellelement (20) zum Einstellen einer Schwenkstellung der Düseneinheit (14), wobei das Einstellelement (20) um eine Längsachse (22) des Einstellelements (20) drehbar ist, wobei die Längsachse (22) von der Düseneinheit (14) beabstandet ist, wobei das Einstellelement (20) ein Exzenterelement (24) mit wenigstens einer Exzenterfläche (26) aufweist, wobei zum Einstellen einer Schwenkstellung eine Drehbewegung des Einstellelements (20) über die Exzenterfläche (26) in eine Schwenkbewegung der Düseneinheit (14) um die Gehäuseachse (18) umsetzbar ist, wobei die Düseneinheit (14) für die Umsetzung wenigstens eine mit der Exzenterfläche (26) kontaktierbare Kontaktfläche (30) aufweist.

## Beschreibung

### Hintergrund der Erfindung

Die vorliegende Erfindung betrifft eine Vorrichtung für eine Scheibenwischeranlage zur Ausbildung wenigstens eines Flüssigkeitsstrahls.

Bekannte Vorrichtungen für Scheibenwischeranlagen, welche zur Windschutzscheibenreinigung für die Ausbildung von Flüssigkeitsstrahlen aus Scheibenreinigungsflüssigkeit vorgesehen sind, weisen Düseneinheiten mit Düsen zur Erzeugung bzw. Ausbildung des Flüssigkeitsstrahls aus der Scheibenreinigungsflüssigkeit auf und befinden sich in der Regel im Übergangsbereich von der Motorhaube zur Windschutzscheibe. Die Strahlrichtung des Flüssigkeitsstrahls ist durch Verändern der Neigung der Düse bzw. Veränderung des Spritzwinkels der Düse einstellbar, wobei der Spritzwinkel der Düsen in der Regel bei der Anlieferung eines neuen Kraftfahrzeugs an den Kunden voreingestellt wird. Durch die Toleranzen der Einbaulage der Waschdüsen unter der Motorhaube bzw. auf der Wasserkastenabdeckung zur Windschutzscheibe ist insbesondere in vertikaler bzw. lotrechter Richtung in der Regel eine entsprechende Nachjustierung der Düsen erforderlich. Zur Nachjustierung sind bekannte Lösungen meist mit Stellschrauben und Bewegungsgewinde versehen, wobei diese Vorrichtungen zur Nachjustierung meist einen aufgesetzten Aufbau ausbilden, welcher unter anderem eine Erstreckung nach oben bzw. in vertikaler Richtung aufweist, so dass bekannte Lösungen ein den Strömungswiderstand erhöhendes Strömungshindernis darstellen.

### Zugrundeliegende Aufgabe

Der vorliegenden Erfindung liegt die Aufgabe zugrunde, eine Vorrichtung für eine Scheibenwischeranlage zur Ausbildung wenigstens eines Flüssigkeitsstrahls anzugeben, die im Unterschied zu bekannten Lösungen im Einbauzustand einen kompakteren Aufbau, insbesondere in vertikaler bzw. lotrechter Richtung aufweist.

### Erfindungsgemäße Lösung

Diese Aufgabe wird erfindungsgemäß mit einer Vorrichtung für eine Scheibenwischeranlage zur Ausbildung wenigstens eines Flüssigkeitsstrahls mit den Merkmalen des Anspruchs 1 gelöst.

Die erfindungsgemäße Vorrichtung weist wenigstens ein Gehäuse und wenigstens eine Düseneinheit auf, die eine Düse zur Erzeugung eines Flüssigkeitsstrahls aus einer Scheibenreinigungsflüssigkeit aufweist, wobei die Düseneinheit um eine Gehäuseachse des Gehäuses schwenkbar an dem Gehäuse angebracht ist. Die Scheibenreinigungsflüssigkeit ist vorzugsweise über das Gehäuse der Düse zuführbar, wobei an dem Gehäuse beispielsweise wenigstens ein Fluidleitungsanschluss vorgesehen sein kann über den die Scheibenreinigungsflüssigkeit dem Gehäuse zugeführt werden kann.

Die Strahlrichtung des Flüssigkeitsstrahls ist durch Verändern der Neigung der Düse bzw. Veränderung des Spritzwinkels der Düse einstellbar, wobei der Spritzwinkel der Düse in der Regel bei der Anlieferung eines neuen Kraftfahrzeugs an den Kunden voreingestellt wird.

Zum Einstellen einer erwünschten Schwenkstellung der Düseneinheit und damit auch einer erwünschten Strahlrichtung des Flüssigkeitsstrahls bzw. eines erwünschten Spritzwinkels der Düse ist ein Einstellelement vorgesehen. Das Einstellelement ist um eine Längsachse des Einstellelements drehbar. Die Längsachse des Einstellelements ist von der Düseneinheit beabstandet und vorzugsweise rechtwinkelig zu der Gehäuseachse angeordnet. Das Einstellelement ist ferner vorzugsweise manuell um die Längsachse drehbar. Das Einstellelement weist ein Exzenterelement mit wenigstens einer Exzenterfläche auf. Zum Einstellen einer Schwenkstellung der Düseneinheit ist eine Drehbewegung des Einstellelements über die Exzenterfläche in eine Schwenkbewegung der Düseneinheit um die Gehäuseachse umsetzbar. Für diese Umsetzung weist die Düseneinheit wenigstens eine mit der Exzenterfläche kontaktierbare Kontaktfläche auf.

Im Unterschied zu bekannten Lösungen, die meist mit Stellschrauben und Bewegungsgewinde versehen sind und einen aufgesetzten Aufbau ausbilden, welcher unter anderem eine Erstreckung nach oben bzw. in vertikaler Richtung aufweist, kann durch Vorsehen des Einstellelements eine Erstreckung nach oben bzw. in vertikaler Richtung, die größer ist als die von der Düseneinheit bereitgestellte Vertikalerstreckung bzw. über diese hinausgeht, wirksam vermieden werden. Denn durch Vorsehen des Exzenterelements ist das Einstellelement im Unterschied zu bekannten Einstellvorrichtungen bzw. Einstellelementen vollständig in eine zu der Düseneinheit benachbarte Position verlagert. Auf diese Weise wird der Einfluss der erfindungsgemäßen Vorrichtung auf den gesamten Strömungswiderstand des Kraftfahrzeugs im Unterschied zu bekannten Lösungen reduziert. Ferner ermöglicht der kompaktere Aufbau der erfindungsgemäßen Vorrichtung eine optimierte Nutzung bzw. Verkleinerung von Bauraum, insbesondere am Übergang von Motorhaube zu Windschutzscheibe. Die bei bekannten Lösungen vorhandene vertikale Erstreckung der Einstellvorrichtungen - also die Erstreckung in der sogenannten Z-Richtung, welche im Fahrzeugkoordinatensystem der vertikalen Richtung nach oben entspricht, geht bei bekannten Lösungen über die Vertikalerstreckung der Düseneinheit hinaus und stellt ein den Strömungswiderstand erhöhendes Strömungshindernis dar bzw. es muss ein entsprechend größerer Bauraum vorgehalten werden. Dieses Strömungshindernis kann durch Einsatz der erfindungsgemäßen Vorrichtung beseitigt werden, die im Unterschied zu bekannten Lösungen im Einbauzustand einen kompakteren Aufbau, insbesondere in vertikaler bzw. lotrechter Richtung (Z-Richtung) hat. Bei dem Fahrzeugkoordinatensystem handelt es sich um ein dreidimensionales, rechtshändiges Koordinatensystem mit welchem die Lage der Bauteile des Fahrzeugs bzw. Kraftfahrzeugs definiert werden kann. Die X-Achse des Fahrzeugkoordinatensystems zeigt entgegen der Fahrrichtung des Fahrzeugs, die Z-Achse zeigt nach oben und die Y-Achse zeigt in Fahrtrichtung gesehen nach rechts.

Vorzugsweise kann das Gehäuse und/oder die Düseneinheit und/oder die Düse und/oder das Einstellelement aus einem Kunststoffmaterial bestehen, wobei das Gehäuse und/oder die Düseneinheit und/oder die Düse und/oder das Einstellelement besonders bevorzugt in Form eines Spritzgussteils ausgebildet sein können, so dass sich das Gehäuse und/oder die Düseneinheit und/oder die Düse und/oder das Einstellelement auf praktische und kostengünstige Weise durch Spritzgussfertigung in großer Stückzahl herstellen lassen.

Bei einer praktischen Ausführungsform weist die Vorrichtung einen Halterahmen auf, wobei das Gehäuse an dem Halterahmen lösbar befestigt ist, wobei der Halterahmen an ein Kraftfahrzeug im Bereich zwischen einer Motorhaube und einer Windschutzscheibe des Kraftfahrzeugs befestigbar ist. Über den Halterahmen kann eine praktische und einfache Montage der Vorrichtung an dem Kraftfahrzeug erfolgen. Die Befestigung des Gehäuses an dem Halterahmen ist als lösbare Befestigung ausgebildet, so dass es z.B. im Wartungsfall möglich ist, das Gehäuse und damit auch die Düseneinheit von dem Kraftfahrzeug zu lösen. Vorzugsweise ist bei dieser praktischen Ausführungsform das Gehäuse durch wenigstens eine lösbare formschlüssige Verbindung an dem Halterahmen lösbar befestigt. Diese lösbare formschlüssige Verbindung kann besonders bevorzugt in Form einer Schnappverbindung ausgebildet sein.

Bevorzugt kann sich das Einstellelement durchgehend durch eine kreisförmige Öffnung des Halterahmens in Richtung des Gehäuses erstrecken, wobei ein zylindrischer Abschnitt des Einstellelements in der Öffnung drehbar um die Längsachse des Einstellelements aufgenommen ist. Durch Vorsehen der kreisförmigen Öffnung und des in der Öffnung aufgenommenen zylindrischen Abschnitts des Einstellelements wird auf praktische Weise eine Drehbarkeit des Einstellelements um seine Längsachse realisiert. Vorzugsweise ist hierbei ein Endabschnitt des Einstellelements durch eine Kugelschnappverbindung an dem Gehäuse gehalten. Über die Kugelschnappverbindung wird wirksam ein Herausbewegen des zylindrischen Abschnitts aus der Öffnung in Richtung der zentralen Achse der Öffnung vermieden. Über die Kugelschnappverbindung kann der Endabschnitt des Einstellelements und damit das Einstellelement auf praktische Weise an dem Gehäuse gehalten sein und für Montagezwecke bzw. Demontagezwecke auf praktische Weise auch wieder von dem Gehäuse gelöst werden.

Es kann zur Vermeidung eines Herausbewegens des zylindrischen Abschnitts aus der Öffnung in Richtung der zentralen Achse der Öffnung auch ein Sicherungselement vorgesehen sein, welches eingerichtet ist, den zylindrischen Abschnitt in der Öffnung zu halten. Die kann insbesondere ein Sicherungsring sein.

Bei einer praktischen Ausführungsform weist das Einstellelement einen länglichen Schlitz zum Ansetzen eines Werkzeugs auf, welches zum manuellen Drehen des Einstellelements um die Längsachse vorgesehen ist. Über den Schlitz kann auf praktische Weise eine manuelle Drehung des Einstellelements zur Einstellung einer erwünschten Schwenkstellung der Düseneinheit erfolgen. Das Werkzeug kann hierbei beispielsweise ein üblicher Schraubendreher sein.

Bei einer bevorzugten Ausführungsform weist die Exzenterfläche wenigstens zwei ebene aneinander angrenzende Teilflächen auf, die relativ zueinander geneigt sind, und wobei jede Teilfläche mit der Kontaktfläche kontaktierbar ist. Durch Vorsehen von zueinander geneigten ebenen Teilflächen lassen sich mehrere diskrete bzw. fest vorgegebene Schwenkstellungen ausbilden, in welchen die Teilflächen die wenigstens eine Kontaktfläche kontaktieren bzw. flächig an der wenigstens einen Kontaktfläche anliegen. Besonders bevorzugt weist die Exzenterfläche bei dieser bevorzugten Ausführungsform eine Mehrzahl von drei, fünf oder sieben aneinander angrenzenden Teilflächen zur Ausbildung von diskreten bzw. fest vorgegebenen Schwenkstellungen auf, wobei hierbei bei einer Mehrzahl von drei Teilflächen die Teilflächen vorzugsweise wie drei aneinander angrenzende Seiten eines Achtecks, vorzugsweise regelmäßigen Achtecks, relativ zueinander geneigt sind, so dass durch Drehen des Einstellelements um seine Längsachse diskrete Schwenkstellungen durch Drehen des Einstellelements um Drehwinkel einstellbar sind, die konstante Drehwinkelabstände zueinander aufweisen.

Erfindungemäß kann eine beliebige Mehrzahl von Teilflächen vorgesehen sein, wobei die Anzahl der diskreten Schwenkstellungen durch eine entsprechende Mehrzahl von Teilflächen variiert werden kann.

Bei einer weiteren bevorzugten Ausführungsform weist die Düseneinheit zwei parallele ebene Kontaktflächen auf, die einander zugewandt sind, wobei die Längsachse des Einstellelements zwischen den beiden Kontaktflächen angeordnet ist. Das Vorsehen der zwei parallelen ebenen Kontaktflächen ermöglicht über eine Volldrehung des Einstellelements, also eine Drehung um 360 Grad, eine Schwenkbewegung der Düseneinheit während derer die Düseneinheit zwei Umkehr-Schwenkstellungen bzw. einen oberen Totpunkt und einen unteren Totpunkt einnimmt, welche im Vergleich zu allen anderen Schwenkstellungen den größten Schwenkwinkel-Abstand zueinander aufweisen. Somit kann eine erwünschte Schwenkstellung der Düseneinheit und damit auch eine erwünschte Spritzrichtung der Düse bzw. Strahlrichtung des Flüssigkeitsstrahls durch Drehen des Einstellelements in eine beliebige Drehrichtung erfolgen, da an den Umkehr-Schwenkstellungen, also dem oberen Totpunkt und dem unteren Totpunkt, sich der Drehsinn des über die Drehung des Einstellelements veränderbaren Schwenkwinkels bzw. die Schwenkrichtung ändert.

Bevorzugt weist bei dieser weiteren praktischen Ausführungsform die Düseneinheit ein U-förmiges Element mit zwei Schenkeln auf, wobei über das U-förmige Element die Drehbewegung des Einstellelements in eine Schwenkbewegung der Düseneinheit umsetzbar ist, wobei jeweils eine der beiden Kontaktflächen an einem der beiden Schenkel vorgesehen ist und das Einstellelement zwischen den beiden Schenkeln angeordnet ist.

Es können mindestens zwei Düseneinheiten an einem Fahrzeug vorgesehen sein mit mindestens jeweils einer Düse zur Applikation von Scheibenreinigungsflüssigkeiten auf eine Scheibe des Fahrzeugs. Die Düsen können so zueinander angeordnet sein, dass die die Düsen verlassenden Flüssigkeitsstrahle der Scheibenreinigungsflüssigkeit jeweils innerhalb zueinander im Wesentlichen parallel ausgerichteter Ebenen liegen, so dass alle Flüssigkeitsstrahle in Richtung zur Fahrzeug-Längserstreckung auf die Scheibe ausrichtbar sind.

### Kurzbeschreibung der Zeichnungen

Nachfolgend werden Ausführungsbeispiele der Erfindung anhand der beigefügten Zeichnungen näher erläutert. Es zeigt:
- Fig. 1: eine Vorderansicht eines Ausführungsbeispiels einer erfindungsgemäßen Vorrichtung,
- Fig. 2: eine dreidimensionale Darstellung der Vorrichtung mit einem Halterahmen,
- Fig. 3: eine dreidimensionale Darstellung der Vorrichtung, welche den Haltrahmen, das Einstellelement und die Düseneinheit voneinander beabstandet zeigt,
- Fig. 4: eine dreidimensionale Darstellung der Vorrichtung in einer Perspektive, welche die Düse der Düseneinheit zeigt,
- Fig. 5, 6 und 7: jeweils dreidimensionale Darstellungen der Vorrichtung, welche sich durch die Schwenkstellung der Düseneinheit voneinander unterscheiden,
- Fig. 8: eine dreidimensionale Darstellung des Einstellelements der in den Fig. 1 bis 7 dargestellten Vorrichtung,
- Fig. 9: eine Draufsicht des in Fig. 8 dargestellten Einstellelements,
- Fig. 10: eine Seitenansicht des in Fig. 8 dargestellten Einstellelements,
- Fig. 11: eine weitere Seitenansicht des in Fig. 8 dargestellten Einstellelements zusammen mit einer Seitenansicht der in Fig. 1 dargestellten Vorrichtung ohne Halterahmen und Einstellelement
- Fig. 12: eine Seitenansicht der in Fig.1 dargestellten Vorrichtung, wobei aus dieser Seitenansicht hervorgeht wie das Einstellelement an dem Gehäuse gehalten ist,
- Fig. 13: eine dreidimensionale Darstellung eines weiteren Ausführungsbeispiels einer erfindungsgemäßen Vorrichtung,
- Fig. 14, 15 und 16: jeweils dreidimensionale Darstellungen der Vorrichtung der Fig. 13, welche sich durch die Schwenkstellung der Düseneinheit voneinander unterscheiden,
- Fig. 17: eine dreidimensionale Darstellung eines weiteren Ausführungsbeispiels einer erfindungsgemäßen Vorrichtung.

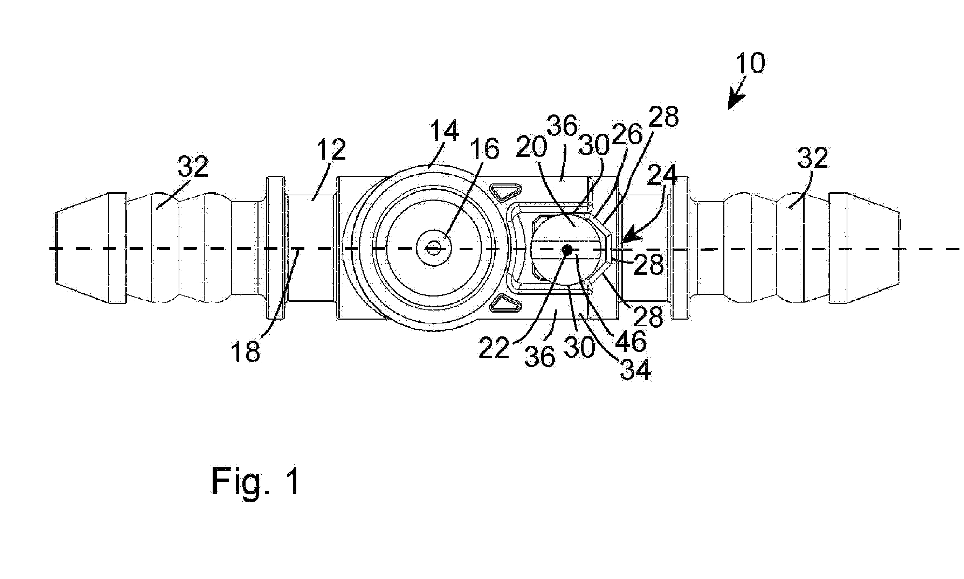

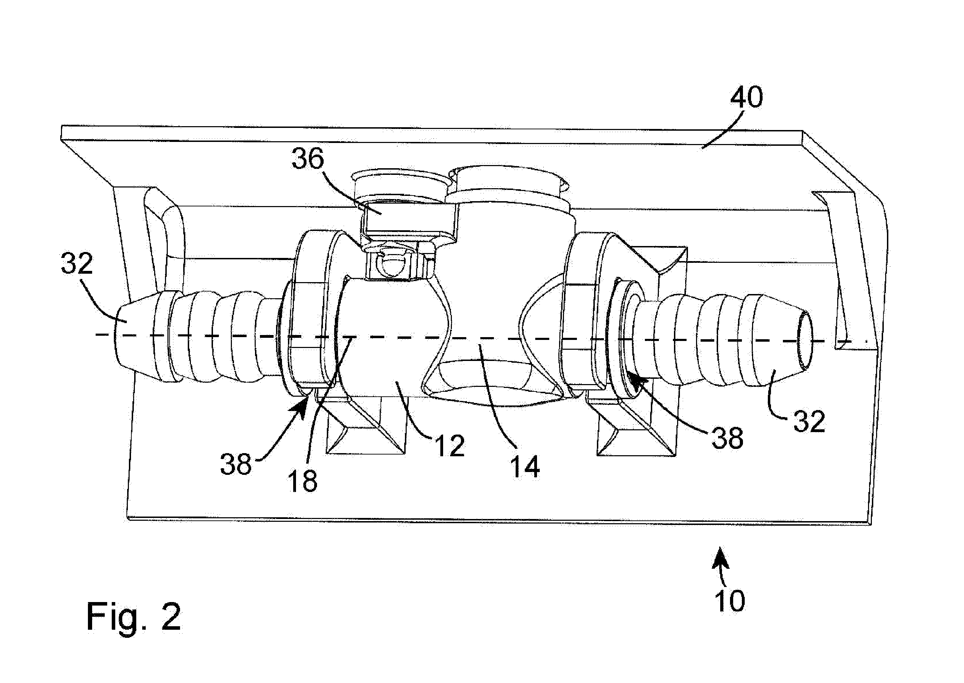

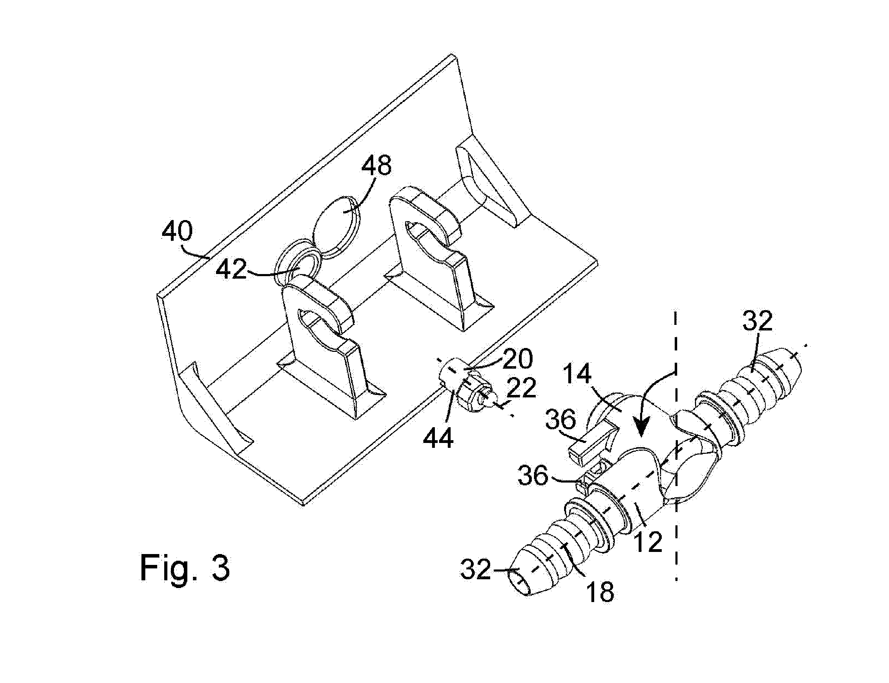

Die in Fig. 1 dargestellte erfindungsgemäße Vorrichtung 10 für eine Scheibenwischeranlage zur Ausbildung eines Flüssigkeitsstrahls weist ein Gehäuse 12 und eine Düseneinheit 14 auf, die eine Düse 16 zur Erzeugung eines Flüssigkeitsstrahls aus einer Scheibenreinigungsflüssigkeit aufweist, wobei die Düseneinheit 14 um eine Gehäuseachse 18 des Gehäuses 12 schwenkbar an dem Gehäuse 12 angebracht ist (vgl. hierzu auch Fig. 2 und auch den Pfeil in Fig. 3 zur Veranschaulichung der Schwenkbarkeit um die Gehäuseachse 18). Die Vorrichtung 10 weist ferner ein Einstellelement 20 zum Einstellen einer Schwenkstellung der Düseneinheit 14 auf, wobei das Einstellelement 20 um eine Längsachse 22 des Einstellelements 20 drehbar ist, die von der Düseneinheit 14 beabstandet ist.

Das Einstellelement 20 weist ferner ein Exzenterelement 24 mit einer zusammenhängenden Exzenterfläche 26 auf, wobei die Exzenterfläche 26 drei ebene aneinander angrenzende Teilflächen 28 aufweist, die relativ zueinander geneigt sind, und wobei jede Teilfläche 28 mit jeder von zwei ebenen Kontaktflächen 30 kontaktierbar ist, die einander zugewandt sind.

Die Scheibenreinigungsflüssigkeit ist über das Gehäuse 12 der Düse 16 zuführbar, wobei einer der an dem Gehäuse 12 vorgesehenen Fluidleitungsanschlüsse 32 für die Zuführung der Scheibenreinigungsflüssigkeit vorgesehen ist. Der andere der beiden Fluidleitungsanschlüsse 32 kann vorzugsweise für die Herstellung einer fluidleitenden Verbindung zu einer weiteren benachbarten Vorrichtung zur Ausbildung eines Flüssigkeitsstrahls vorgesehen sein.

Zum Einstellen einer Schwenkstellung der Düseneinheit 14 ist eine Drehbewegung des Einstellelements 20 um die Längsachse 22 über die Exzenterfläche 26 in eine Schwenkbewegung der Düseneinheit 14 um die Gehäuseachse 18 umsetzbar, wobei die beiden mit der Exzenterfläche 26 kontaktierbaren Kontaktflächen 30 für die Umsetzung der Drehbewegung in die Schwenkbewegung vorgesehen sind.

Die Längsachse 22 des Einstellelements 20 ist zwischen den beiden Kontaktflächen 30 angeordnet. Das Vorsehen der zwei parallelen ebenen Kontaktflächen 30 ermöglicht über eine Volldrehung des Einstellelements 20, also eine Drehung um 360 Grad, eine Schwenkbewegung der Düseneinheit 14 während derer die Düseneinheit 14 zwei Umkehr-Schwenkstellungen bzw. einen oberen Totpunkt und einen unteren Totpunkt einnimmt, welche im Vergleich zu allen anderen Schwenkstellungen den größten Schwenkwinkel-Abstand zueinander aufweisen. Somit kann eine erwünschte Schwenkstellung der Düseneinheit 14 und damit auch eine erwünschte Spritzrichtung der Düse 16 bzw. eine erwünschte Strahlrichtung des Flüssigkeitsstrahls durch Drehen des Einstellelements 20 in eine beliebige Drehrichtung erfolgen, da an den Umkehr-Schwenkstellungen, also dem oberen Totpunkt und dem unteren Totpunkt, sich der Drehsinn des über die Drehung des Einstellelements 20 veränderbaren Schwenkwinkels bzw. die Schwenkrichtung ändert.

Die Düseneinheit 14 weist bei diesem Ausführungsbeispiel ein U-förmiges Element 34 mit zwei Schenkeln 36 auf, wobei über das U-förmige Element 34 die Drehbewegung des Einstellelements 20 in eine Schwenkbewegung der Düseneinheit 14 umsetzbar ist. Jeweils eine der beiden Kontaktflächen 30 ist an einem der beiden Schenkel 36 vorgesehen und das Einstellelement 20 ist zwischen den beiden Schenkeln 36 angeordnet.

Aus der Fig. 2 ist ersichtlich, dass das Gehäuse 12 durch zwei lösbare formschlüssige Verbindungen in Form von Schnappverbindungen 38 an einem Halterahmen 40 lösbar befestigt ist. Der Halterahmen 40 selbst ist an ein Kraftfahrzeug im Bereich zwischen einer Motorhaube und einer Windschutzscheibe des Kraftfahrzeugs befestigbar. Der Halterahmen kann auch einstückig mit einer Wasserkastenabdeckung ausgebildet sein. Die Fig. 3 veranschaulicht hierbei die Situation in welcher das Gehäuse 12 von dem Halterahmen 40 gelöst ist. Die Fig. 3 veranschaulicht ferner, dass sich das Einstellelement 20 im zusammengebauten Zustand der Vorrichtung 10 durchgehend durch eine kreisförmige Öffnung 42 des Halterahmens in Richtung des Gehäuses 12 erstreckt, wobei ein zylindrischer Abschnitt 44 des Einstellelements 20 in der Öffnung 42 drehbar um die Längsachse 22 des Einstellelements 20 aufgenommen ist.

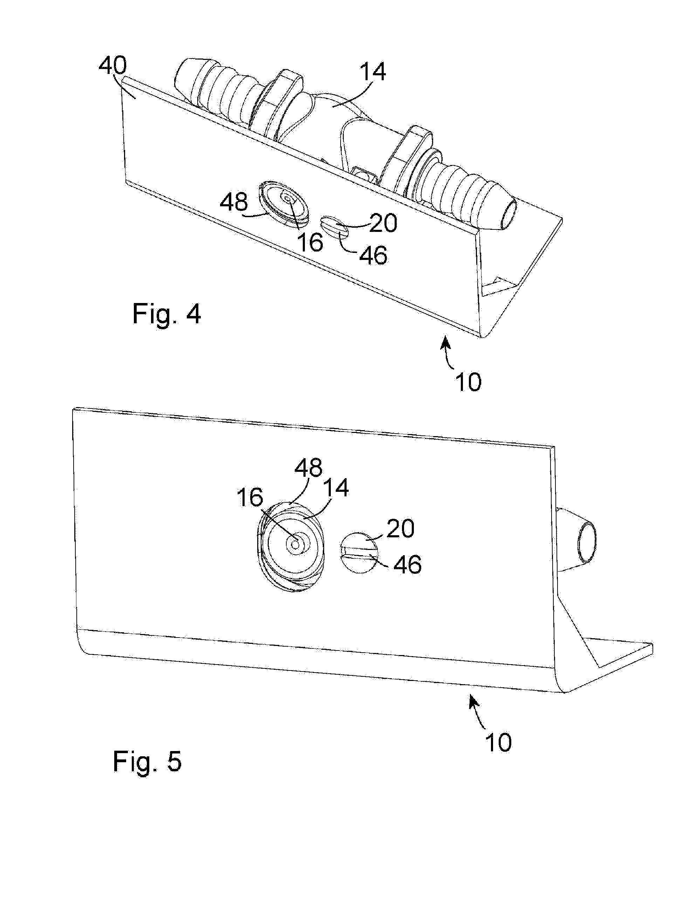

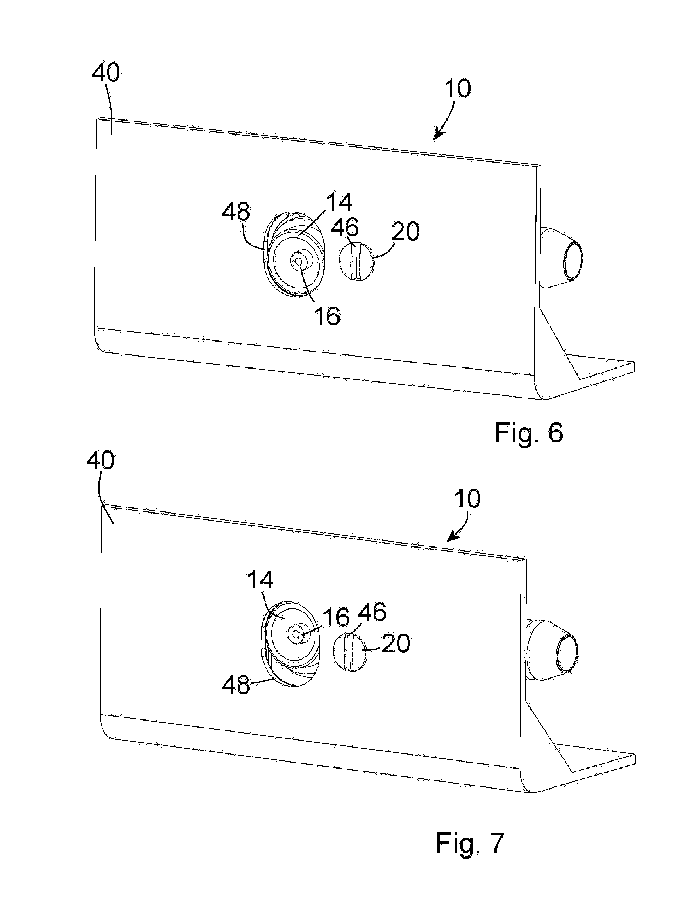

Die Fig. 4, 5, 6 und 7 zeigen jeweils dreidimensionale Darstellungen der erfindungsgemä-βen Vorrichtung in Perspektiven, welche die Düse 16 der Düseneinheit 14 zeigen, wobei die Fig. 4 und 5 die Düseneinheit 14 in einer mittleren Schwenkstellung veranschaulichen, und wobei die Fig. 6 und 7 die Düseneinheit 14 in einem unteren Totpunkt bzw. in einem oberen Totpunkt zeigen.

Aus den Fig. 4, 5, 6 und 7 ist ersichtlich, dass das Einstellelement 20 einen länglichen Schlitz 46 zum Ansetzen eines Werkzeugs aufweist, welches zum manuellen Drehen des Einstellelements 20 um die Längsachse 22 vorgesehen ist. Durch Drehen des Einstellelements 20 um 180 Grad kann die Düseneinheit 14 von dem oberen Totpunkt in den unteren Totpunkt geschwenkt werden und umgekehrt. Durch eine Drehung um 360 Grad kann eine vor der Drehung eingenommene Schwenkstellung wieder eingenommen werden. Die Fig. 4, 5, 6 und 7 zeigen ferner, dass der Halterahmen 40 eine diesen durchsetzende Öffnung 48 in Form eines Langlochs 48 aufweist, wobei ein aus der Düse 16 austretender Flüssigkeitsstrahl über dieses Langloch 48 sich durchgehend durch den Halterahmen 40 erstrecken kann. Die Geometrie des Langlochs 48 ist hierbei insbesondere an die möglichen Schwenkstellungen der Düseneinheit 14 angepasst.

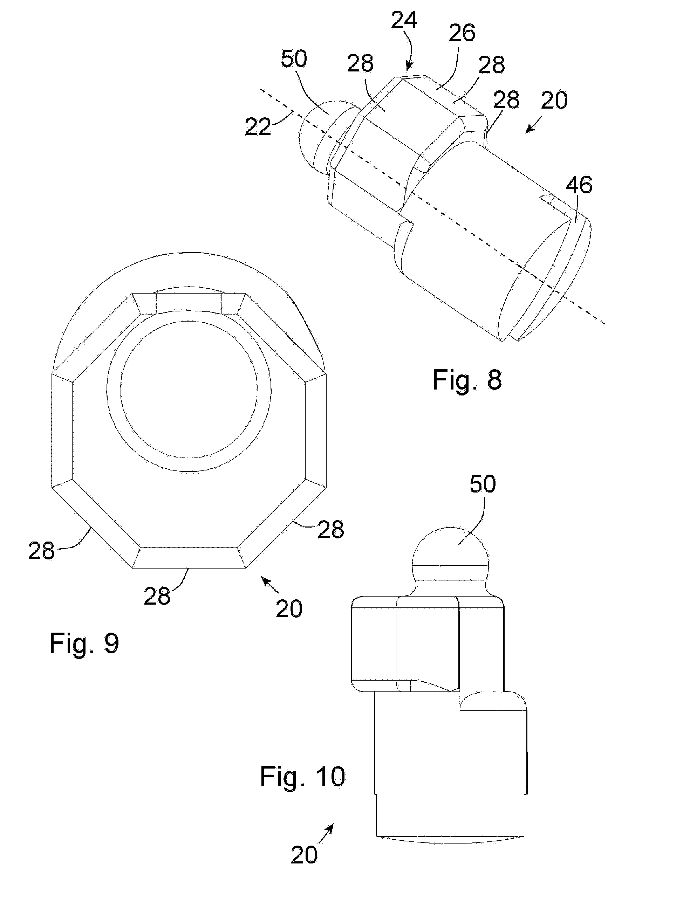

Die Fig. 8 bis 10 veranschaulichen die Ausbildung des Einstellelements 20, welches das Exzenterelement 24 mit der zusammenhängenden Exzenterfläche 26 aufweist, wobei die Exzenterfläche 26 drei ebene aneinander angrenzende Teilflächen 28 aufweist, die relativ zueinander geneigt sind. Die Fig. 9 zeigt, dass die drei Teilflächen 28 wie die Teilflächen von drei aneinander angrenzenden Seiten eines regelmäßigen Achtecks relativ zueinander geneigt sind, so dass durch Drehen des Einstellelements 20 um seine Längsachse 22 diskrete Schwenkstellungen durch Drehen des Einstellelements 20 um Drehwinkel einstellbar sind, die konstante Drehwinkelabstände zueinander aufweisen.

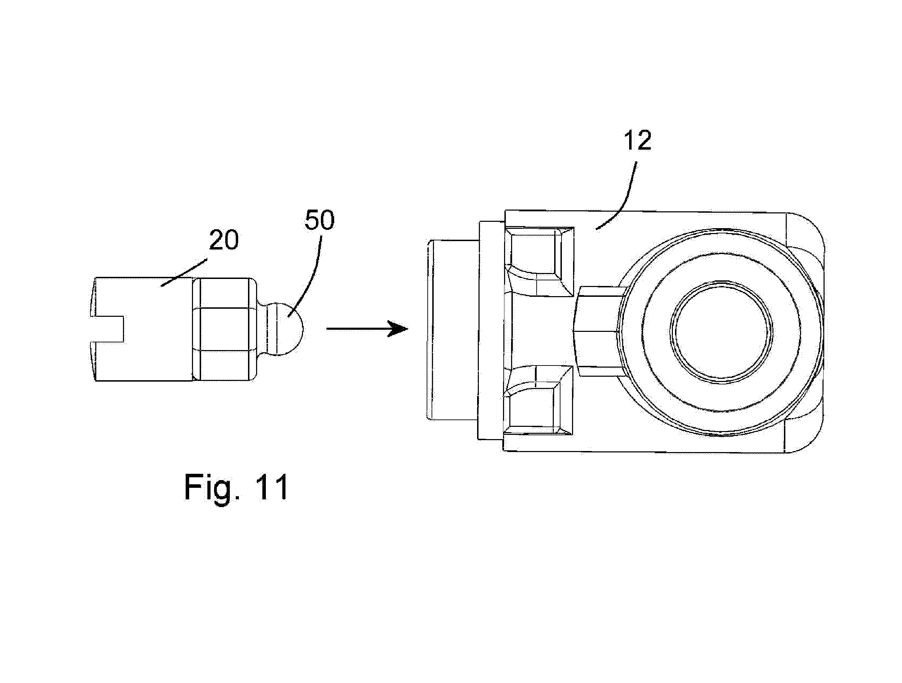

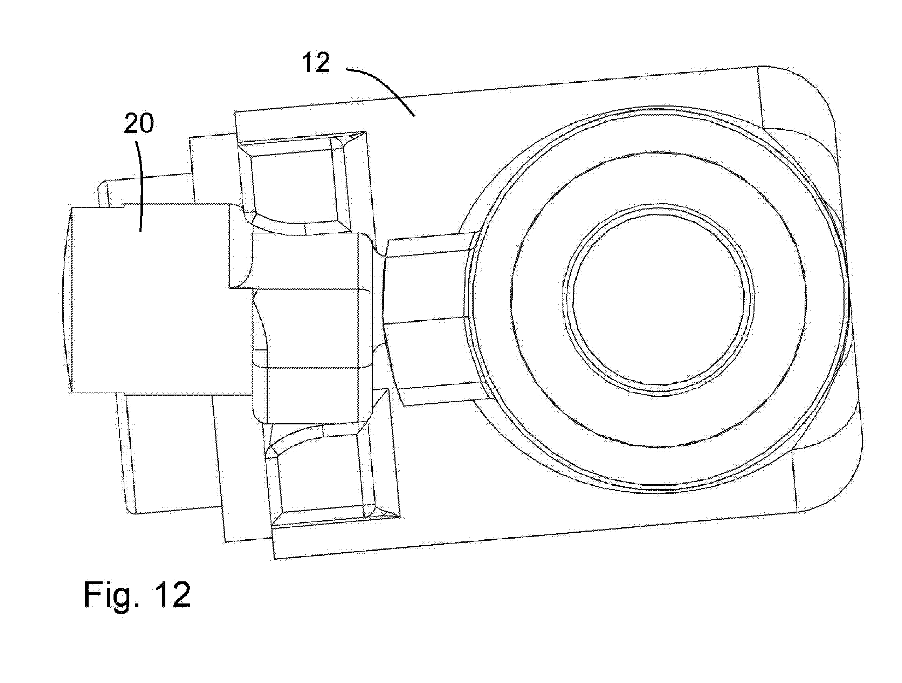

Die Fig. 8 und 10 zeigen ferner, dass ein Endabschnitt 50 des Einstellelements 20 für die Ausbildung einer Kugelschnappverbindung eingerichtet ist und vorliegend in Form eines Teils 50 einer Kugel bzw. eines Kugelabschnitts 50 ausgebildet ist. Die Fig. 12 veranschaulicht die Aufnahme dieses Endabschnitts 50 in einer für die Ausbildung der Kugelschnappverbindung vorgesehenen Aufnahme an dem Gehäuse 12. Über die so bereitgestellte Kugelschnappverbindung ist das Einstellelement 20 an dem Gehäuse 12 gehalten. Die Fig. 11 veranschaulicht die Situation vor dem Einbringen (vgl. Pfeil) des Endabschnitts 50 in die Aufnahme zur Herstellung der Kugelschnappverbindung.

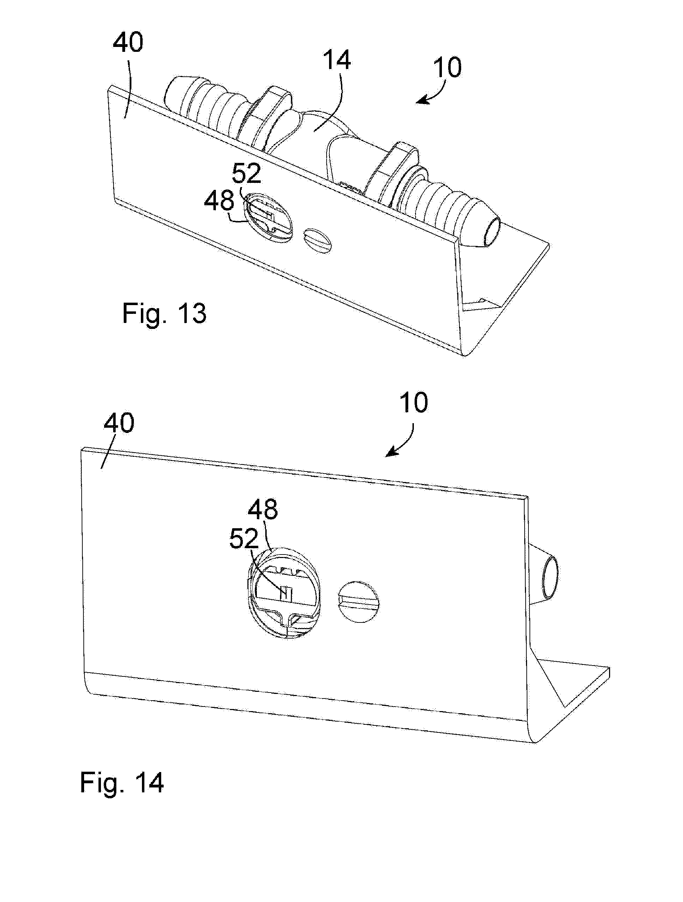

Die Fig. 13, 14, 15 und 16 zeigen jeweils dreidimensionale Darstellungen eines weiteren Ausführungsbeispiels einer erfindungsgemäßen Vorrichtung 10. Im Unterschied zu dem zuvor beschriebenen Ausführungsbeispiel, bei dem eine Düse 16 vorgesehen ist, die einen Fluidkanal mit einer kreisförmigen Querschnittsfläche aufweist, weist die Düseneinheit 14 bei dem hier dargestellten Ausführungsbeispiel eine Düse 16 in Form eines sog. "Fluidic-Chip" auf. Bei dem Fluidic-Chip" handelt es sich um eine Einrichtung zur Erzeugung eines periodisch seine Richtung ändernden Flüssigkeitsstrahls, wobei zur Erzeugung dieses Flüssigkeitsstrahls eine einströmende Scheibenreinigungsflüssigkeit von zwei Strömungshindernissen abgelenkt wird. Die Scheibenreinigungsflüssigkeit kann hierbei in Form dieses periodisch seine Richtung ändernden Flüssigkeitsstrahls aus einer schlitzförmigen Öffnung 52, die in den Fig. 13 bis 16 erkennbar ist, heraustreten.

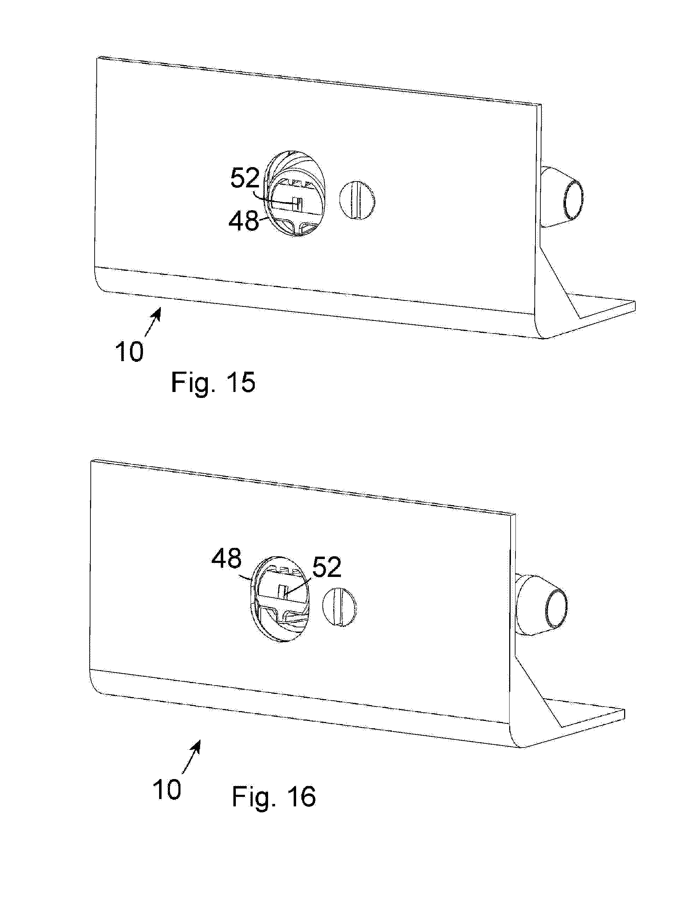

Die Fig. 13 und 14 zeigen die Düseneinheit 14 in einer mittleren Schwenkstellung und die Fig. 15 und 16 zeigen die Düseneinheit 14 in einem unteren Totpunkt bzw. in einem oberen Totpunkt.

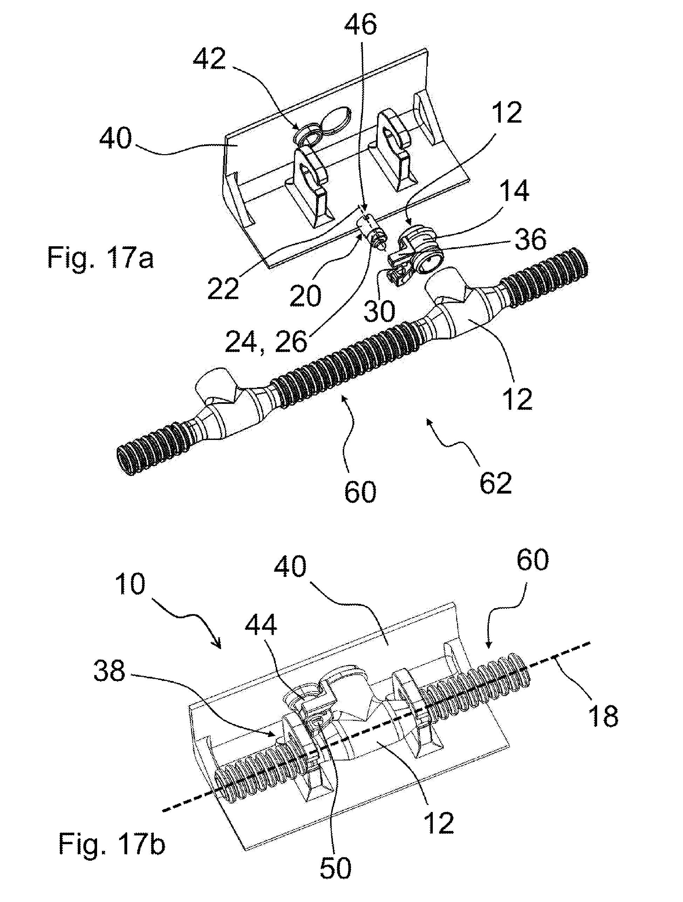

In Abwandlung der vorstehend beschriebenen und in den Figuren 1 bis 16 dargestellten Ausführungsformen, weist die in den Figuren 17a und 17b dargestellte weitere Ausführungsform einer erfindungsgemäßen Vorrichtung 10 für eine Scheibenwischeranlage zur Ausbildung eines Flüssigkeitsstrahls ein Gehäuse 12 auf, welches durch eine einstückig ausgeformten Mündung 12 eines Wellrohres 60 ausgebildet ist. Eine Düseneinheit 14, die eine Düse 16 zur Erzeugung eines Flüssigkeitsstrahls aus einer Scheibenreinigungsflüssigkeit aufweist, ist um eine Gehäuseachse 18 des Gehäuses 12 schwenkbar an dem Gehäuse 12 angebracht. Die Schwenkachse 18 läuft hierbei entlang der Längsachse des als Zuleitung 62 der Scheibenreinigungsflüssigkeit ausgebildeten Wellrohrs 60. In dieser Ausführungsform ist die Düseneinheit 14 innerhalb des Gehäuses 12 bzw. innerhalb der Mündung 12 aufgenommen und von dieser zumindest teilweise umschlossen. Die Vorrichtung 10 weist ferner ein Einstellelement 20 zum Einstellen einer Schwenkstellung der Düseneinheit 14 auf, wobei das Einstellelement 20 um eine Längsachse 22 des Einstellelements 20 drehbar ist, die von der Düseneinheit 14 beabstandet ist. Der Aufbau des Einstellelements 20 entspricht dem der in den Figuren 8 bis 10 dargestellten. Das Wellrohr 60 kann mittels eines Extrusionsverfahrens hergestellt werden. Das Extrusionsverfahren erlaubt es über einen, vorzugsweise unmittelbar, nachfolgenden Thermoformschritt unter Verwendung von Vakuum und/oder Druck nach der Extrusion und im Zuge der Wellrohrformung mehrere Gehäuse 12 bzw. Mündungen 12 einstückig und in beliebigem Abstand und Winkelstellung zueinander mit dem als Zuleitung 62 der Scheibenreinigungsflüssigkeit ausgebildeten Wellrohr 60 auszuformen. Das jeweilige Gehäuse 12 bzw. die jeweilige Mündung 12 ist dabei so ausgebildet, dass im Wesentlichen keine Querschnittsveränderung innerhalb der Zuleitung 62 vorliegt. Vorteilhaft reduziert sich die Durchflussmenge der transportierten Scheibenreinigungsflüssigkeit daher nicht. Aufgrund der Herstellung der Zuleitung 62 bzw. des Wellrohres 60 mittels eines Extrusionsverfahrens lassen sich quasi endlose Zuleitungs-Düsenketten herstellen. Dies ist in Figur 17a durch ein zweites Gehäuse 12 bzw. eine zweite Mündung 12 angedeutet, die selbstredend ebenfalls Teil einer erfindungsgemäßen Vorrichtung 10 sein kann. Somit lassen sich beliebig viele Vorrichtungen 10 entlang der Zuleitung 62 anordnen. Überraschenderweise hat sich gezeigt, dass durch die Flexibilität des Wellrohrs 60, selbst über sehr geringe Abstände von zwei Vorrichtungen 10 bzw. Gehäusen 12 zueinander, die Schwenkstellungen der Vorrichtungen 10 unbeeinflusst voneinander einstellbar sind. Aus der Fig. 17b ist ersichtlich, dass das Gehäuse 12 durch zwei lösbare formschlüssige Verbindungen in Form von Schnappverbindungen 38 an einem Halterahmen 40 lösbar befestigt ist. Der Halterahmen 40 selbst ist an ein Kraftfahrzeug im Bereich zwischen einer Motorhaube und einer Windschutzscheibe des Kraftfahrzeugs befestigbar.

Der prinzipielle weitere Aufbau dieser Ausführungsform unterscheidet sich nicht gegenüber den vorstehend bereits erläuterten Ausführungsformen, so dass diesbezüglich auf die Figuren 1 bis 16 und deren Beschreibung verwiesen werden kann.

## Patentansprüche

1. Vorrichtung (10) für eine Scheibenwischeranlage zur Ausbildung wenigstens eines Flüssigkeitsstrahls, mit
wenigstens einem Gehäuse (12),
wenigstens einer Düseneinheit (14), die eine Düse (16) zur Erzeugung eines Flüssigkeitsstrahls aus einer Scheibenreinigungsflüssigkeit aufweist, wobei die Düseneinheit (14) um eine Gehäuseachse (18) des Gehäuses (12) schwenkbar an dem Gehäuse (12) angebracht ist,
einem Einstellelement (20) zum Einstellen einer Schwenkstellung der Düseneinheit (14), wobei das Einstellelement (20) um eine Längsachse (22) des Einstellelements (20) drehbar ist, wobei die Längsachse (22) von der Düseneinheit (14) beabstandet ist,
wobei das Einstellelement (20) ein Exzenterelement (24) mit wenigstens einer Exzenterfläche (26) aufweist, wobei zum Einstellen einer Schwenkstellung eine Drehbewegung des Einstellelements (20) über die Exzenterfläche (26) in eine Schwenkbewegung der Düseneinheit (14) um die Gehäuseachse (18) umsetzbar ist, wobei die Düseneinheit (14) für die Umsetzung wenigstens eine mit der Exzenterfläche (26) kontaktierbare Kontaktfläche (30) aufweist.

2. Vorrichtung (10) nach Anspruch 1, **dadurch gekennzeichnet, dass** die Vorrichtung (10) einen Halterahmen (40) aufweist, wobei das Gehäuse (12) an dem Halterahmen (40) lösbar befestigt ist, wobei der Halterahmen (40) an ein Kraftfahrzeug im Bereich zwischen einer Motorhaube und einer Windschutzscheibe des Kraftfahrzeugs befestigbar ist.

3. Vorrichtung (10) nach Anspruch 2, **dadurch gekennzeichnet, dass** das Gehäuse (12) durch wenigstens eine lösbare formschlüssige Verbindung (38) an dem Halterahmen (40) lösbar befestigt ist.

4. Vorrichtung (10) nach Anspruch 2 oder 3, **dadurch gekennzeichnet, dass** sich das Einstellelement (20) durchgehend durch eine kreisförmige Öffnung (42) des Halterahmens (40) in Richtung des Gehäuses (12) erstreckt, wobei ein zylindrischer Abschnitt (44) des Einstellelements (20) in der Öffnung (42) drehbar um die Längsachse (22) des Einstellelements (20) aufgenommen ist.

5. Vorrichtung (10) nach Anspruch 4, **dadurch gekennzeichnet, dass** ein Endabschnitt (50) des Einstellelements (20) durch eine Kugelschnappverbindung an dem Gehäuse (12) gehalten ist.

6. Vorrichtung (10) nach Anspruch 4, **dadurch gekennzeichnet, dass** zur Vermeidung eines Herausbewegens des zylindrischen Abschnitts (44) aus der Öffnung (42) in Richtung der zentralen Achse der Öffnung (42) ein Sicherungselement vorgesehen ist, welches eingerichtet ist, den zylindrischen Abschnitt (44) in der Öffnung (42) zu halten.

7. Vorrichtung (10) nach einem der vorangehenden Ansprüche, **dadurch gekennzeichnet, dass** das Einstellelement (20) einen länglichen Schlitz (46) zum Ansetzen eines Werkzeugs aufweist, welches zum manuellen Drehen des Einstellelements (20) um die Längsachse (22) vorgesehen ist.

8. Vorrichtung (10) nach einem der vorangehenden Ansprüche, **dadurch gekennzeichnet, dass** die Exzenterfläche (26) wenigstens zwei ebene aneinander angrenzende Teilflächen (28) aufweist, die relativ zueinander geneigt sind, und wobei jede Teilfläche (28) mit der Kontaktfläche (30) kontaktierbar ist.

9. Vorrichtung (10) nach einem der vorangehenden Ansprüche, **dadurch gekennzeichnet, dass** die Düseneinheit (14) zwei parallele ebene Kontaktflächen (30) aufweist, die einander zugewandt sind, wobei die Längsachse (22) des Einstellelements (20) zwischen den beiden Kontaktflächen (30) angeordnet ist.

10. Vorrichtung (10) nach Anspruch 9, **dadurch gekennzeichnet, dass** die Düseneinheit (14) ein U-förmiges Element (34) mit zwei Schenkeln (36) aufweist, wobei über das U-förmige Element (34) die Drehbewegung des Einstellelements (20) in eine Schwenkbewegung der Düseneinheit (14) umsetzbar ist, wobei jeweils eine der beiden Kontaktflächen (30) an einem der beiden Schenkel (36) vorgesehen ist und das Einstellelement (20) zwischen den beiden Schenkeln (36) angeordnet ist.
